# EUROPEAN PATENT SPECIFICATION

(11) **EP 2 988 588 B1**
(45) Date of publication and mention of the grant of the patent: **29.03.2017**
(21) Application number: 14721558.6
(22) Date of filing: 22.04.2014
(51) Int. Cl.: A01G 1/00, A01G 31/02, A01G 9/02

(54) **EPIPHYTE GROWING SYSTEM WITH A SPIRALLY DOWNWARDLY EXTENDING GROOVE-SHAPED SPACE**
EPIPHYTEN-KULTURSYSTEM MIT SPIRALFÖRMIG ABWÄRTS FÜHRENDEN RINNENARTIGEN AUSSPARUNGEN
SYSTÈME DE CULTURE D'ÉPIPHYTES AVEC UN ESPACE EN FORME D'ENCOCHE S'ÉTENDANT EN SPIRAL VERS LE BAS

(30) Priority: 26.04.2013 NL 2010716
(43) Date of publication of application: 02.03.2016
(73) Proprietor: Anthura B.V., 2665 KV Bleiswijk (NL)
(72) Inventor: VAN TWIST, Marcel Bastiaan, NL-2665 KV Bleiswijk (NL)
(74) Representative: EP&C
(86) International application number: PCT/NL2014/050256
(87) International publication number: WO 2014/175728

(56) References cited:
- EP-A1- 0 575 298
- DE-U1-202007 017 780
- JP-A- 2006 042 725
- NL-C2- 1 002 139
- US-A- 5 557 886

## Description

The invention relates to epiphyte growing systems and methods with plant containers and pre-shaped substrate plugs for cultivation of epiphyte plants such as orchids, in particular Phalaenopsis orchids, and Anthuriums, in particular Anthurium andreanum.

In free nature, epiphytes are plants which grow on other plants, such as trees, non-parasitically while deriving their moisture and nutrients from the air and rain. Aerial roots of the epiphyte plants develop which are quite thick and which grow downwardly through the air along the other host plant. In present cultivation practice, adult epiphyte plants are for example grown inside plant containers which are filled with a light open-textured, coarse-grained substrate material such as ground tree bark. Thus it can be guaranteed that the air roots get properly aerated and do not remain constantly wet, while at the same time the epiphyte plant gets enough support.

Before being potted in such coarse grained substrate material, young epiphyte plants are first grown for a couple of months in trays which are kept under controlled conditions inside glasshouses. Each tray comprises a plurality of small truncated cone-shaped holding spaces arranged in a matrix. With this use is made of pre-shaped plugs. Those plugs for example are made of peat and coconut material which is pressed and glued together in a truncated cone-shape complementary to the one of the holding spaces. Each plug is provided with a suitable central opening inside which a young epiphyte plant, like a seedling or a tissue culture plant, is placed with some of its tiny roots. After a few months, when the young plants have grown big enough they are potted over into the above mentioned larger singular plant containers each having merely one holding space. When placed inside the larger singular plant containers, the plants get embedded with their pre-shaped substrate plugs inside the loose coarse-grained substrate material.

The present cultivation method leaves room for improvement. The growing speed and the growing result to be obtained within a certain time frame can be increased. In particular the lengths and volumes which the air roots are able to obtain during their young stadium when potted with their plugs inside the trays is limited. The roots grow in an L-shape, firstly vertically down towards the bottom and then horizontally towards the circumferential wall. The maximum length the air roots of the epiphyte plant can thus reach during growing inside the trays is mainly determined by the dimensioning of the tray's holding spaces. For holding spaces which have heights of approximately 4 cm and radii of 2-3 cm, this results in maximum total lengths for each of the air roots of 6-7 cm. This in turn sets boundaries for the entire epiphyte plant itself. Both during growing inside the trays as well as during further growing inside the singular plant containers. The more root volume the epiphyte plants can obtain in the trays, the faster they can grow on inside the singular plant containers. If it is desired to increase the root volume, then the only solution available now is to work with larger trays with larger volumes of holding spaces. This however is considered undesirable in terms of space efficiency.

DE 20 2007 017 780 discloses an assembly of a bulb-shaped outer plant container and a cylindrical inner plant container for an orchid to grow in. A growing space is left free in between the inner and outer containers for aerial roots of the orchid to grow into. In order to obtain the growing space a large volume outer container is needed.

US 5,557,886 discloses a plant container for an epiphyte which is equipped with horizontal edges for guiding aerial roots towards pruning openings. With this the maximum root length is limited.

EP 0 575 298 discloses a plant container for cultivation of seedlings which is equipped with vertical grooves for guiding roots towards pruning openings. Here also the maximum root length is limited.

The present invention aims to overcome those disadvantages at least partly or to provide a usable alternative. In particular the invention aims to provide an epiphyte growing system which allows for healthier and even more beautiful epiphytes plants to be grown commercially inside limited volumes of holding spaces of plant containers such as trays.

This aim is achieved by an epiphyte growing system according to claim 1. The system comprises a plant container, a pre-shaped substrate plug placed inside the container, and an epiphyte plant placed inside the plug. The container has a bottom and a circumferential wall which together delimit a holding space. According to the inventive thought one or more primary groove-shaped spaces are left free which remain unfilled with substrate material, and which lie between the circumferential wall of the plant container and an outer wall of the pre-shaped substrate plug. Each of those primary groove-shaped spaces extends sloping, in particular spirally, downwardly along the circumferential wall and the outer wall. The groove-shaped space follows this sloping spiral line from an upper to a lower part of the container.

Thus between the container and the plug an advantageous relative long free path is created for air roots of the epiphyte plant to grow towards and then further freely unhindered there along downwards towards the bottom of the container. The provision of the one or more groove-shaped spaces results in one or more preferential positions and directions for the air root growth inside the assembly of container and plug. Owing to this preferential position and direction, the root growth can be optimized for volume, that is to say both for length and cross-section. The path has a substantially larger length than merely the height of the container which was used according to the state of the art system and method. Thus the roots can grow substantially larger. In practice it is clearly visible that the air roots in this new epiphyte growing system grow downwards like a sort of twirling snake neatly along the primary groove-shaped spaces left free between the walls of the container and the plug. After having reached the bottom, the air roots have appeared to there grow on, for example with one or more substantially circular goes. For holding space heights of approximately 4 cm and radii of 2-3 cm, maximum lengths for the air roots have now been measured of no less than 13-16 cm. This is an impressive increase of almost 50% compared to the state of the art!

Since the roots merely have to fill up empty space and do not have to make way for themselves inside the plug material, they can more easily grow thicker compared to the state of the art where they had to grow their way through compressed and glued pre-shaped substrate plug material. Thus an increase in air root volume can be obtained of even more than 50%. Also it has appeared that watering of the epiphyte plant can be improved, since a mixture of fresh water and nutrients gets suitably guided along the one or more groove-shaped spaces along the plug, that is to say specifically there along where the air roots are already lying waiting to take up some of this water and nutrients.

It is noted that a singular plant container having a spiral projection along its inner wall is already known to be used for growing a strawberry plant or the like. See JP-11318217 and JP-2011112050. The spiral projections here act as guide for the thin roots of the strawberry plant and thus help to prevent those thin roots from getting entangled or hindered by each other. A groove-shaped space however is not left free here, neither is there being made use of a pre-shaped plug as substrate material. Instead the strawberry plant here is potted inside a plant container which is fully filled with loose potting soil.

In an embodiment according to the present invention the epiphyte growing system has its primary groove-shaped space partly formed as a spirally downwardly extending recess inside the outer wall of the plug. Thus without having to modify the plant container it can already be achieved that the one or more groove-shaped spaces are guaranteed void of substrate material.

In the alternative or in addition thereto the epiphyte growing system has its primary groove-shaped space delimited by a spirally downwardly extending laterally inward projecting edge formed into the circumferential wall of the plant container. This laterally projecting edge of the circumferential wall then can delimit a lower side of the primary groove-shaped space.

In a further embodiment the shape of the outer wall of the substrate plug varies from the shape of the circumferential wall of the plant container such that they are not fully complementary to each other when assembled together. This may help in creating the aimed free spaces.

The holding space and the plug may have all kinds of shapes, like rectangular, cylindrical, etc. In a preferred embodiment the circumferential wall of the plant container substantially has a truncated cone shape with a first cone angle, and the outer wall of the substrate plug substantially has a truncated cone shape with a second cone angle. The dimensioning of the primary groove-shaped spaces can then be influenced by the cone angle of the circumferential wall and the width of the laterally projecting edge. The plug can then be made to locally connect thereto with its own cone angle which can be calculated with the width of the edge and the number of circumvolutions it makes between the upper and lower sides of the container. For example the second cone angle of the outer wall of the substrate plug can be made somewhat larger, in particular a few degrees larger, than the first cone angle of the circumferential wall of the plant container. Together with a width of a 1-4 mm, in particular 2-3 mm, for the edge, it can then automatically be achieved that after having placed the plug inside the container, the outer wall of the substrate plug gets to delimit an upper side of the primary groove-shaped space. The lower side then can for example be delimited by the above mentioned spirally downwardly extending laterally inward projecting edge formed into the circumferential wall of the plant container. It is however also possible to use a separate loose spiral insert element, which comprises one or more spirally downwardly extending ridges. Those ridges then extend between the plant container and the pre-shaped substrate plug and thus together with the plant container and the plug delimit the one or more primary groove-shaped spaces. It is then even possible to equip the ridge of the spiral insert element, the circumferential wall of the plant container and the outer wall of the substrate plug with truncated cone shapes with substantially similar cone angles. Only the cross-sectional dimensions of the plug then need to be made a few mm smaller than those of the container, such that the spiral insert element fits between them. Each spirally downwardly extending ridge then gets to delimit an upper and lower side of the primary groove-shaped space, whereas this primary groove shaped space towards its radially outer and inner sides is delimited by the plant container and plug respectively.

The spiral insert element further can comprise an upper circumferentially closed ring part and/or a bottom part. This advantageously makes it possible to use the spiral insert element as a kind of basket pot inside which the plug can be placed such that its integrity can be maintained more easily during handling.

In a further embodiment the spiral insert element and the plant container can be provided with complementary connection means for releasably connecting the spiral insert element to the plant container, for example by means of a suitable click or snap-fit connection, such that it is axially delimited upwards therein. This advantageously helps to keep the assembly of plug and spiral insert element inside the container during growing of the aerial roots of the epiphyte plant. Otherwise there would be a risk that this growing would push the plug and insert element upwardly out of the container. The complementary connection means can for example be provided between the upper ring of the insert element and the container and/or between the bottom part of the insert element and the container.

In an even further embodiment the spiral insert element can be made out of biodegradable material, such that in a later phase, after the aerial roots have already started to grow along spiral paths, it automatically disappears. In the alternative it can also be made out of other materials, like plastic such that it can be re-used.

Thus it is advantageously possible to have the one or more primary groove-shaped spaces formed by a suitable cooperation between a minor modification to the container and a suitably differently shaped plug positioned therein and/or by a suitable cooperation between a container, plug and spiral insert element.

The primary groove-shaped space preferably has cross-sectional dimension of at least 2 mm2, in particular at least 4 mm2. This offers sufficient room for the air roots to grow into and along them.

The plant container can be made out of all kinds of materials, but preferably is at least partially made out of a substantially transparent material. In particular the wall section along the primary groove-shaped space is kept at least partially transparent. This helps the air roots to quicker find their way towards the groove-shaped space and there aid from the sunlight or artificial light shining upon them.

The bottom of the plant container preferably is provided with a secondary groove-shaped space extending around the outer circumference of the bottom and connecting to a lower end of the primary groove-shaped space. The air roots having grown through the primary groove-shaped spaces and having ultimately reached the bottom, then are enticed to further follow a distinctive void growing path along the bottom of the container. This secondary groove-shaped space can be obtained by means of a suitable recess inside the lower side of the plug. Preferably however the container itself is provided with some sort of gutter running along the outer edge of its bottom. This gutter then has the additional advantage that it may help to accumulate some of the water and nutrients fed to the growing system without it having drained away immediately.

The pre-shaped substrate plug can be made out of one integral part, two halves which can be positioned against each other, a stack of discs, etc. Also it can be made out of all kinds of materials like natural and artificial ones. Preferably it has been manufactured out of a glued composition of substrate materials. The glue gives it sufficient strength and substantially helps to maintain the integrity of the plug during and after the growing of the roots through it. Together with the air roots growing around the plug, it is then no longer necessary to use other means, like small baskets, to keep the plug's substrate materials together.

Further preferred embodiments are stated in the other dependent subclaims.

The invention also relates to an epiphyte cultivation method according to claim 13, as well as to a pre-shaped substrate plug according to claim 14, and to the use of a plant container according to claim 15.

The invention shall now be explained in more detail with reference to the accompanying drawings in which:
Fig. 1 a and 1 b shows an exploded view of a plant container, pre-shaped substrate plug and epiphyte plant according to an embodiment of the invention in a first and second growing stadium;
Fig. 2a and 2b show assembled views of the components of fig. 1;
Fig. 3a and 3b show cross-sectional views of fig. 2;
Fig. 4a, b and c show a side, top and cross-sectional perspective view of the plant container of fig. 1;
Fig. 5 shows a tray comprising an array of the plant containers of fig. 1;
Fig. 6 shows a cross-sectional view of the tray of fig. 5 with pre-shaped substrate plugs and epiphyte plants placed therein;
Fig. 7 is a view according to fig. 1 of a variant with a spiral insert element;
Fig. 8 is a view according to fig. 3 of the variant of fig. 7; and

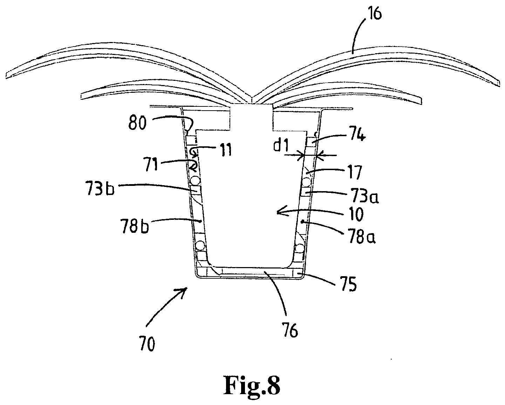

Fig. 8 shows the assembly of the epiphyte plant, the pre-shaped substrate plug and the spiral insert element of fig. 8 taken out of the plant container.

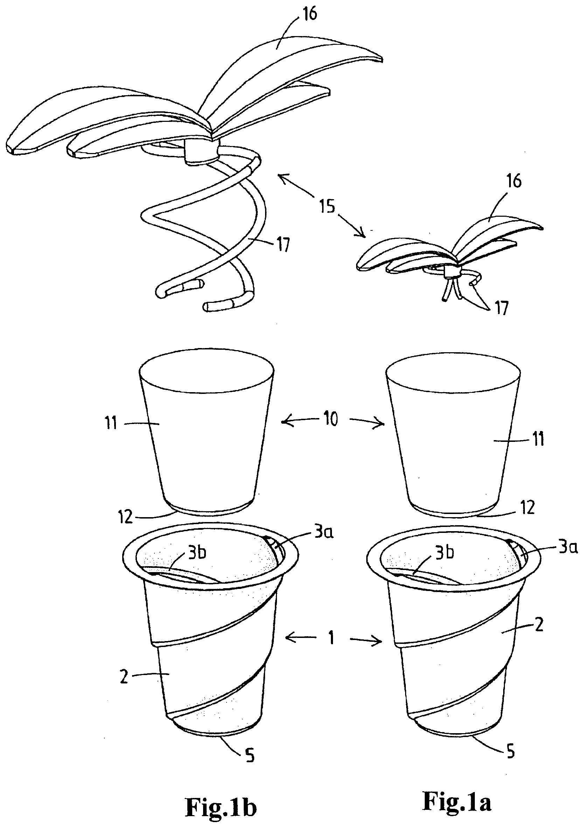

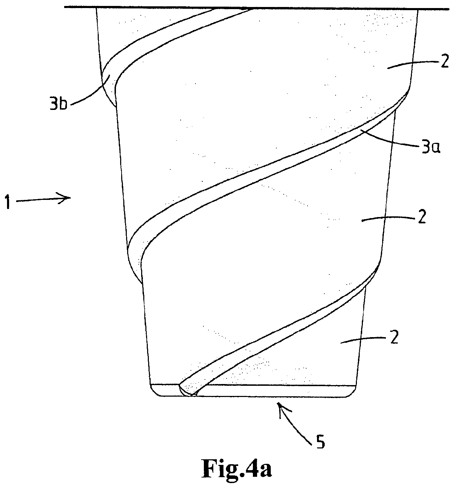

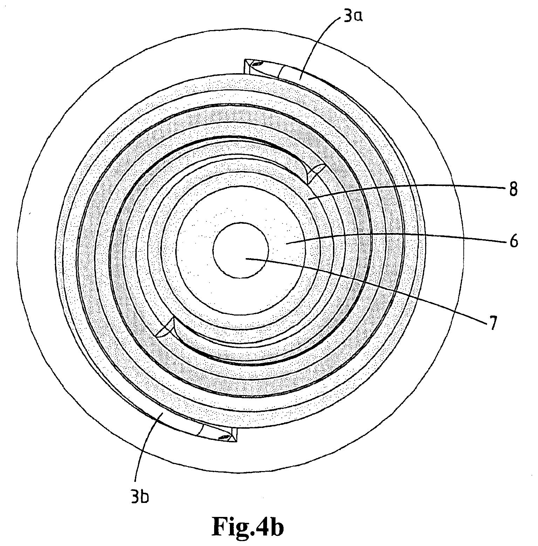

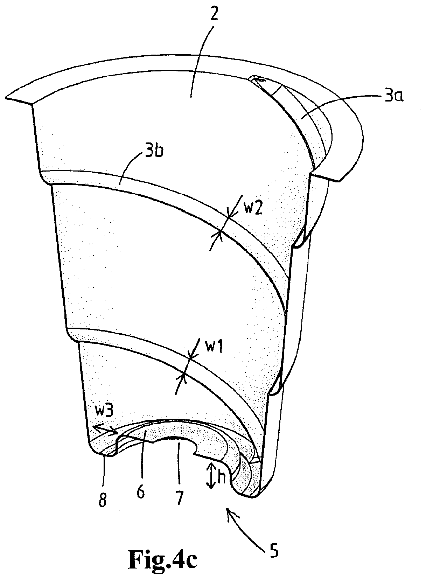

In fig. 1-4 a plant container in its entirety has been given the reference numeral 1. The container 1 has a substantially truncated cone shaped holding space which is delimited by a circumferential wall 2 which is formed with two spirally downwardly extending laterally inward projecting edges 3a, 3b. The edges 3a, 3b start at opposing circumferential positions near an upper side of the container 1 and end at opposing circumferential positions near a lower side thereof. Each edge 3a, 3b has a width of a few mm and follows a sloping line of between 20-40 degrees relative to the horizontal. The sloping line spirals clockwise downwards. Between the upper and lower sides of the container 1, each spiralling edge 3a, 3b makes an entire turn of about 360 degrees, that is to say has substantially one full circumvolution.

The container 1 at its lower side has a profiled bottom wall 5. This bottom wall 5 has a central raised portion 6 which is equipped with an irrigation outlet opening 7. Around the central raised portion 6 a gutter 8 is present.

In fig. 1 furthermore a pre-shaped substrate plug 10 is shown. The plug 10 has a substantially truncated cone shaped outer wall 11 and a substantially flat bottom wall 12. The plug 10 is made out of glued compacted substrate material like a mixture of grinded peat and coconut particles.

Finally in fig. 1 an epiphyte plant 15 is shown having leafs 16 and air roots 17.

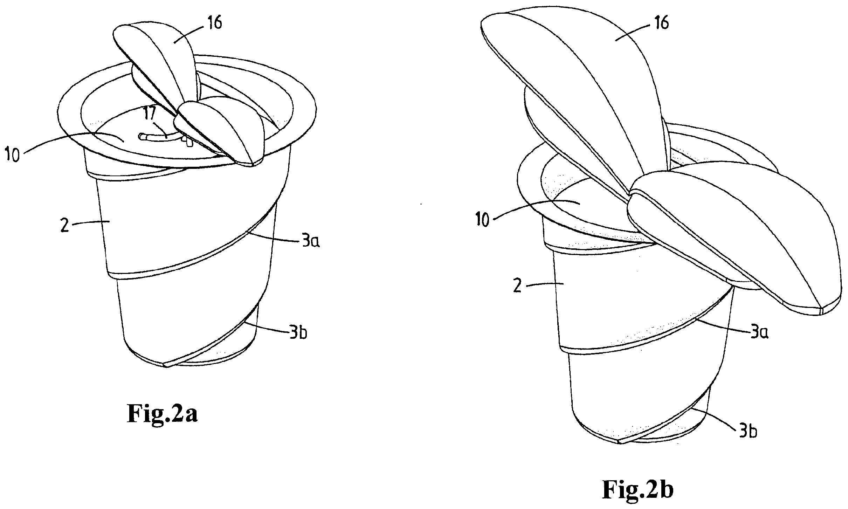

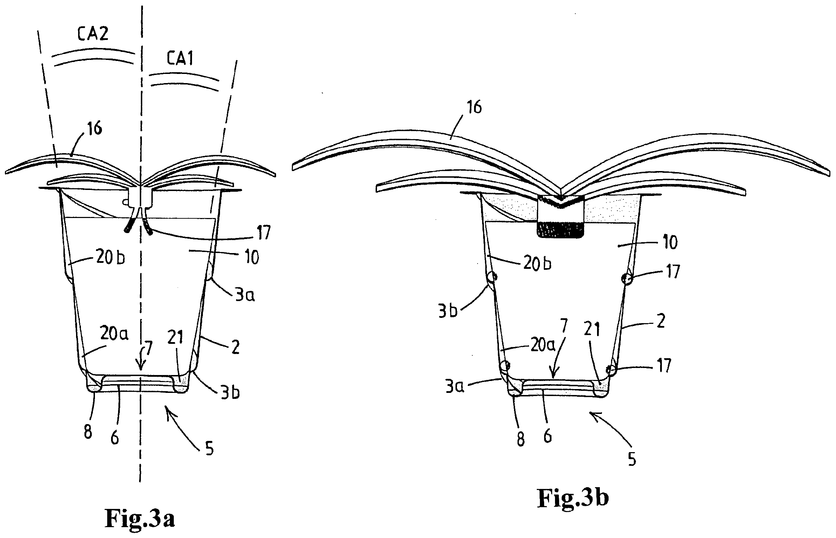

Fig. 2 and 3 show the assembled state of the three main components of fig. 1, that is to say the container 1, the plug 10 and the epiphyte plant 15, which together form a so-called epiphyte growing system. As can best be seen in fig. 3, the container 1 and the plug 10 together define two opposing primary groove-shaped spaces 20a, 20b in between them which are void of substrate and container material and which spiral downward together with the edges 3a, 3b. At their lower sides the primary groove-shaped spaces 20a, 20b connect to a secondary groove-shaped space 21 which runs along the gutter 8 and which is also void of substrate and container material.

The primary groove-shaped spaces 20a, 20b are automatically formed as soon as the plug 10 is placed inside the container 1. The dimensioning of the primary groove-shaped spaces 20a, 20b is influenced by cone angles CA1 and CA2 of the container 1 and plug respectively, widths w1 and w2 of the edges 3a, 3b, and the number of circumvolutions each groove-shaped space 20a, 20b makes between the upper and lower sides of the container 1. Thus in the shown situation one could say that the plug 10 and the container 1 are not fully complementary to each other. In particular the cone angle CA1 of the container 1 is a few degrees smaller than the cone angle CA2 of the plug 10, and have relative dimensions such that the outer wall 11 of the plug 10 substantially merely lies against inward parts of the edges 3a, 3b. Thus the primary groove-shaped spaces 20a, 20b are delimited at their lower sides by the edges 3a, 3b of the container 1, at their outer sides by the circumferential wall 2 of the container 1, and for their remaining part by the outer wall 11 of the plug 10. Seen in cross-section the primary groove-shaped spaces 20a, 20b have an elongated triangular shape.

The secondary groove-shaped space 21 is also automatically formed as soon as the plug 10 is placed inside the container 1, because of the plug 10 resting with its bottom 12 at the raised central portion 6. The dimensioning of the secondary groove-shaped space 21 is influenced by the height h of the central raised portion 6 and the width w3 of the gutter 8. With this the secondary groove-shaped space 21 is delimited at its upper side by the bottom wall 12 of the plug 10 and for its remaining part by the parts of the bottom wall 5 which delimit the gutter 8.

According to the invention the primary and secondary groove-shaped spaces 20a, 20b, 21 give roots of the epiphyte plant 15 the full freedom to start growing therein. Because of this the roots have a tendency to grow thicker and/or longer compared to the state of the art.

Fig. 1a, 2a and 3a shows a first growing stadium in which the epiphyte plant 15 has just been placed with some tiny roots in for example a central opening inside the plug 10. Fig. 1b, 2b and 3b shows a second growing stadium a few months later in which the epiphyte plant 15 has been given the time to grow and in which some of the tiny roots have developed into thicker air roots 17 of the plant which have neatly grown along the primary and secondary groove-shaped spaces 20a, 20b and 21.

During use the plant 15 can be temporarily watered. The water shall then for a large part run smoothly along the primary groove-shaped spaces 20a, 20b and from there run into the secondary groove-shaped space 21. Because of the central raised portion 6, some of the water shall remain into the gutter 8 until it is sucked up by the air root 17 lying in it. Excess water shall immediately leave the container 1 via the irrigation outlet opening 7.

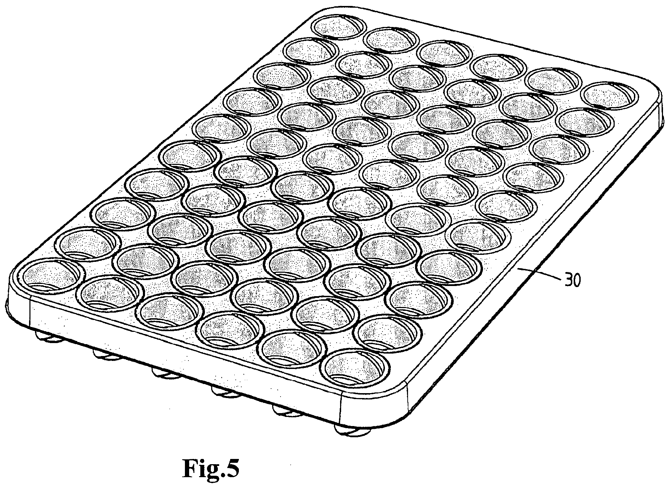

Fig. 5 show the invention incorporated into a tray 30. Such a tray is well suited for mass production of young epiphyte plants in a commercial environment. The tray 30 is formed by an integral assembly of plant containers 1 which together delimit an array of holding spaces each having two spirally downwardly extending laterally inward projecting edges 3a, 3b formed therein.

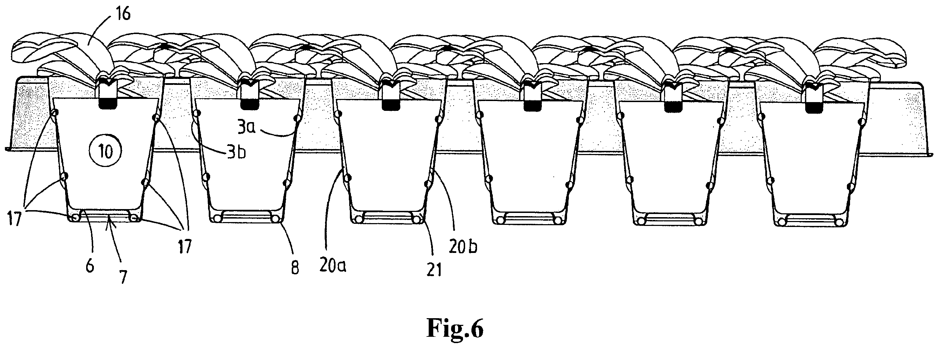

Fig. 6 shows the tray 30 being filled with assemblies of the pre-shaped substrate plugs 10 and epiphyte plants 15 grown with their air roots along the spiraling primary groove-shaped spaces 20a, 20b into the secondary groove-shaped space 21.

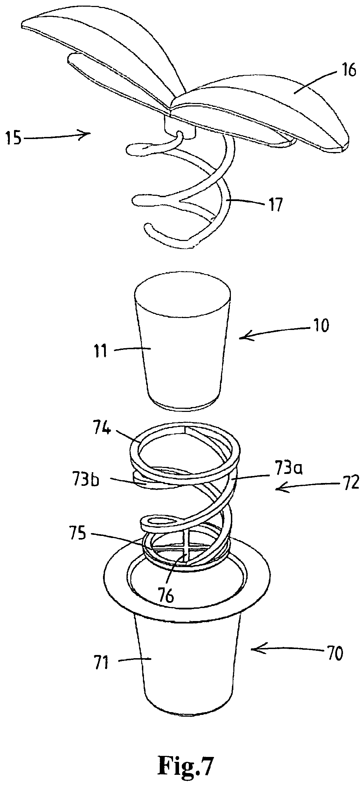

In fig. 7 a variant is shown of which similar parts have been given the same reference numerals. This time the system comprises a plant container 70 has a substantially smooth circumferential wall 71 which delimits a substantially truncated cone shaped holding space. The truncated cone shape of the container 70 here has been given the same cone angle as the one of the plug 10. The cross-sectional dimensions of the container 70 and plug 10 have been chosen such that the plug 10 fits with a circumferential play d1 inside the container 70. See fig. 8.

A distinctive spiral insert element 72 is provided. This spiral insert element 72 comprises two spirally downwardly extending ridges 73a, 73b. At an upper side, the ridges 73a, 73b are connected to an upper circumferentially closed ring part 74. At a lower side, the ridges 73a, 73b are connected to a lower circumferentially closed ring part 75. Inside the lower ring part 75, cross beams 76 are provided. The lower ring part 75 and the cross beams 76 together form a bottom part upon which the plug 10 can be placed. The thickness of the ridges 73a, 73b in a radial direction is substantially equal to the abovementioned play d1.

In the assembled state as shown in fig. 8 the four main components of fig. 7, that is to say the container 70, the plug 10, the spiral insert element 72 and the epiphyte plant 15, together form the epiphyte growing system. As can be seen the container 70, the spiral insert element 72 and the plug 10 together define two opposing primary groove-shaped spaces 78a, 78b in between them which are void of substrate material and which spiral downwards together with the ridges 73a, 73b.

The primary groove-shaped spaces 78a, 78b are automatically formed as soon as the spiral insert element 72 and the plug 10 have been placed inside the container 70. Thus the primary groove-shaped spaces 78a, 78b are delimited at their lower and upper sides by the ridges 73a, 73b, at their outer sides by the circumferential wall 71 of the container 70, and at their inner sides by the outer wall 11 of the plug 10. Seen in cross-section, the primary groove-shaped spaces 20a, 20b have a somewhat oblong parallelogram shape.

The container wall 71 is provided with inwardly projecting snap organs 80 which form complementary connection means together with the ring part 74. During insertion of the spiral insert element 72 into the container 70, the ring part 74 needs to be pushed downwards past by the snap organs 80. From then on the spiral insert element 72 is axially delimited upwards relative to the container 70. As soon as the aerial roots 17 have started growing into the spaces 78a, 78b, the plant 15 and the plug 10 are also axially delimited upwards relative to the container 70 owing to the connection between the insert element 72 and the container 70. If it is desired to remove the plant 15 from out of the container 70, it can be pulled upwardly together with the plug 10 and the spiral insert element 72. With this the ring part 74 of the insert element 10 needs to get forced to pass by the snap organs 80 again.

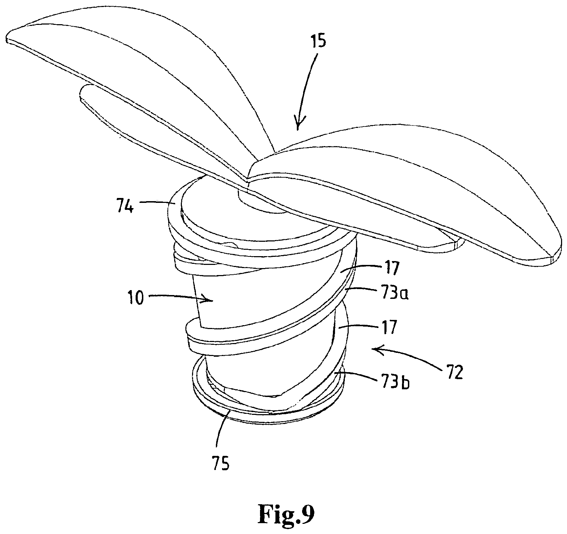

A thus removed assembly of plant 15, plug 10 and spiral insert element 72, as shown in fig. 9, can advantageously be handled with great care. The aerial roots 17 lie somewhat protected on top and below the ridges 73a, 73b, and thus do not have the risk of accidentally getting broken or damaged. The plug 10 is properly supported on top of the cross beams 76 and lies somewhat protected inside the ridges 73a, 73b, and the ring parts 74, 75 of the insert element 72.

Besides the embodiments shown, numerous variants are possible. For example the dimensions and shapes of the containers, plugs and spiral insert elements can be altered. It is also possible to provide the spiraling primary groove-shaped spaces and/or the secondary groove-shaped space partly or entirely into the plug for example as recesses therein. Like with the variant of the spiral insert element, in that case the container walls can be kept substantially flat without lateral edges, gutters or the like having to be provided therein. Instead of two, also merely one or three or any other desired number of primary groove-shaped spaces can be provided. Furthermore the sloping angle of the primary groove-shaped spaces can be made somewhat more or less steep, and less or more than one circumvolution can be made by each one of them. The plant containers or trays can be made out of all kinds of materials, preferably plastic. The plugs can be made out of natural and/or artificial materials. They do not have to be glued as long as they are able to maintain their shape at least during an initial potting and growing phase. Instead of the primary and secondary groove-shaped spaces being filled with (humid) air, it is also possible to initially fill them with some kind of soluble growing medium like a gelatin.

Thus according to the invention a user-friendly economic epiphyte growing system has been provided with which it is possible to grow strong, healthy and big epiphyte plants by creating relative long void growing paths for the air roots to grow along.

## Claims

1. Epiphyte growing system, comprising:
- a plant container (1) having a bottom and circumferential wall (5, 2) which together delimit a holding space;
- a pre-shaped substrate plug (10) placed inside the holding space; and
- an epiphyte plant (15) of the type growing air roots (17) and being placed inside the plug (10),
**characterized in that**,
the plant container (1) and the pre-shaped substrate plug (10) together define one or more primary groove-shaped spaces (20a, 20b) between the circumferential wall (2) of the plant container (1) and an outer wall (11) of the pre-shaped substrate plug (10),
wherein said one or more groove-shaped spaces (20a, 20b) are void of substrate material, and
wherein said one or more groove-shaped spaces (20a, 20b) spiral downward along said circumferential and outer wall (2, 11) for one or more air roots (17) of the epiphyte plant (15) to grow along.

2. Epiphyte growing system according to claim 1, wherein the primary groove-shaped space (20a, 20b) is at least partly formed as a spirally downwardly extending recess inside the outer wall (11) of the plug (10).

3. Epiphyte growing system according to claim 1 or 2, wherein the primary groove-shaped space (20a, 20b) is delimited by a spirally downwardly extending laterally inward projecting edge (3a, 3b) formed to the circumferential wall (2) of the plant container (1).

4. Epiphyte growing system according to claim 3, wherein the laterally projecting edge (3a, 3b) of the circumferential wall (2) delimits a lower side of the primary groove-shaped space (20a, 20b).

5. Epiphyte growing system according to claim 4, wherein the laterally projecting edge (3a, 3b) has a dimension of between 1-4 mm, in particular 2-3 mm.

6. Epiphyte growing system according to one of the preceding claims, wherein the shape of the outer wall (11) of the substrate plug (10) varies from the shape of the circumferential wall (2) of the plant container (1) such that they are not fully complementary to each other when assembled together.

7. Epiphyte growing system according to claims 4 or 5 and 6, in which the circumferential wall (2) of the plant container (1) substantially has a truncated cone shape with a first cone angle (CA1), and in which the outer wall (11) of the substrate plug (10) substantially has a truncated cone shape with a second cone angle (CA2), and
wherein the second cone angle (CA2) of the outer wall (11) of the substrate plug (10) is larger than the first cone angle (CA1) of the circumferential wall (2) of the plant container (1), and the outer wall (11) of the substrate plug (10) delimits an upper side of the primary groove-shaped space (3a, 3b).

8. Epiphyte growing system according to one of the preceding claims, wherein the plant container (1) is at least partially made out of a substantially transparent material.

9. Epiphyte growing system according to one of the preceding claims, wherein the primary groove-shaped space (78a, 78b) is delimited by a spiral insert element (72), which comprises a spirally downwardly extending ridge (73a, 73b), and which extends between the plant container (70) and the pre-shaped substrate plug (10), wherein the ridge (73a, 73b) in particular delimits an upper and lower side of the primary groove-shaped space (78a, 78b).

10. Epiphyte growing system according to claim 9, wherein the spiral insert element (72) further comprises an upper circumferentially closed ring part (74), and/or wherein the spiral insert element (72) further comprises a bottom part (75, 76), and/or wherein the spiral insert element (72) and the plant container (70) are provided with complementary connection means (80) for releasably connecting the spiral insert element (72) to the plant container (70) such that it is axially delimited upwards therein.

11. Epiphyte growing system according to one of the preceding claims 9 or 10, wherein the spiral insert element (72) is made out of biodegradable material.

12. Epiphyte growing system according to one of the preceding claims, wherein the bottom (5) of the plant container (1) is provided with a secondary groove-shaped space (21) extending around the outer circumference of the bottom (5) and connecting to a lower end of the primary groove-shaped space (20a, 20b), and/or wherein at least two primary groove-shaped spaces (20a, 20b) are provided both extending at different positions spirally downwardly along said circumferential and outer wall (2, 11), and/or wherein a plurality of the plant containers (1) are provided together forming an integral tray (30) having a plurality of the holding spaces, and/or wherein the pre-shaped substrate plug (10) has been manufactured out of a glued composition of substrate materials.

13. Method for cultivation of epiphyte plants, in particular of a Phalaenopsis or Anthurium, comprising the steps:
- providing an assembly of the pre-shaped substrate plug (10), epiphyte plant (15) and the plant container (1) of the epiphyte growing system according to one of the preceding claims; and
- allowing roots (17) of the epiphyte plant (15) to grow towards and further along the primary groove-shaped space (20a, 20b) which has been left void of the substrate material between the circumferential wall (2) of the plant container (1) and the outer wall (11) of the pre-shaped plug (10).

14. Pre-shaped substrate plug (10), in particular for use in the growing system according to one of the preceding claims, comprising a spirally downwardly extending recess inside an outer wall (11) of the plug (10).

15. Use of a plant container (1) according to claim 3 and any of the other claims 1-12, for cultivation of epiphyte plants (15), in particular of a Phalaenopsis or Anthurium.

## Patentansprüche

1. Epiphytenpflanzsystem umfassend:
- einen Pflanzenbehälter (1) mit einem Boden und einer umfänglichen Wandung (5, 2), welche zusammen einen Aufnahmeraum abgrenzen;
- einen vorgeformten Substratpfropfen (10), der sich in dem Aufnahmeraum befindet; und
- eine Epiphytenpflanze (15), die Luftwurzeln (17) ausbildet und in den Substratpfropfen (10) gesetzt wird,
**dadurch gekennzeichnet, dass**
der Pflanzenbehälter (1) und der vorgeformte Substratpfropfen (10) zusammen einen oder mehrere rinnenförmige Hauptzwischenräume (20a, 20b) zwischen der umfänglichen Wandung (2) des
Pflanzenbehälters (1) und der Außenwand (11) des vorgeformten Substratpfropfens (10) definieren, wobei diese eine oder mehreren rinnenförmigen Zwischenräume (20a, 20b) frei von Substratmaterial sind, und
wobei diese eine oder mehreren rinnenförmigen Zwischenräume (20a, 20b) entlang dieser umfänglichen Wandung (2) und Außenwand (11) spiralförmig abwärts verlaufen, damit eine oder mehrere Luftwurzeln (17) der Epiphytenpflanze (15) daran entlangwachsen können.

2. Epiphytenpflanzsystem nach Anspruch 1, worin der rinnenförmige Hauptzwischenraum (20a, 20b) wenigstens teilweise als eine spiralförmig nach unten verlaufende Aussparung in der Außenwand (11) des Substratpfropfens (10) ausgebildet ist.

3. Epiphytenpflanzsystem nach Anspruch 1 oder 2, worin der rinnenförmige Hauptzwischenraum (20a, 20b) von einem spiralförmig nach unten verlaufenden, seitlich nach innen vorstehenden Absatz (3a, 3b), der von der umfänglichen Wandung (2) des Pflanzenbehälters (1) gebildet wird, begrenzt wird.

4. Epiphytenpflanzsystem nach Anspruch 3, wobei die Unterseite des rinnenförmigen Hauptzwischenraums (20a, 20b) vom seitlich vorstehenden Absatz (3a, 3b) der umfänglichen Wandung (2) begrenzt wird.

5. Epiphytenpflanzsystem nach Anspruch 4, worin der seitlich vorstehende Absatz (3a, 3b) eine Abmessung von 1 bis 4 mm und insbesondere 2 bis 3 mm aufweist.

6. Epiphytenpflanzsystem nach einem der vorhergehenden Ansprüche, worin die Form der Außenwand (11) des Substratpfropfens (10) von der Form der umfänglichen Wandung (2) des Pflanzenbehälters (1) derart abweicht, dass sie einander nicht vollständig ergänzen, nachdem sie zusammengebaut worden sind.

7. Epiphytenpflanzsystem nach Anspruch 4 oder nach den Ansprüchen 5 und 6, worin die umfängliche Wandung (2) des Pflanzenbehälters (1) im Wesentlichen kegelstumpfförmig mit einem ersten Kegelwinkel (CA1) ist; und worin die Außenwand (11) des Substratpfropfens (10) im Wesentlichen kegelstumpfförmig mit einem zweiten Kegelwinkel (CA2) ist; und worin der zweite Kegelwinkel (CA2) der Außenwand (11) des Substratpfropfens (10) größer als der erste Kegelwinkel (CA1) der umfänglichen Wandung (2) des Pflanzenbehälters (1) ist und eine Oberseite des rinnenförmigen Hauptzwischenraums (3a, 3b) durch die Außenwand (11) des Substratpfropfens (10) begrenzt wird.

8. Epiphytenpflanzsystem nach einem der vorhergehenden Ansprüche, worin der Pflanzenbehälter (1) wenigstens teilweise aus einem im Wesentlichen durchsichtigen Material hergestellt ist.

9. Epiphytenpflanzsystem nach einem der vorhergehenden Ansprüche, worin der rinnenförmige Hauptzwischenraum (78a, 78b) von einem spiralförmigen Einsatzelement (72) abgegrenzt wird, das eine spiralförmig nach unten verlaufende Rippe (73a, 73b) umfasst und sich zwischen dem Pflanzenbehälter (70) und dem vorgeformten Substratpfropfen (10) erstreckt, wobei von der Rippe (73a, 73b) insbesondere eine Ober- und Unterseite des rinnenförmigen Hauptzwischenraums (78a, 78b) begrenzt werden.

10. Epiphytenpflanzsystem nach Anspruch 9, worin das spiralförmige Einsatzelement (72) weiterhin ein oberes umfänglich geschlossenes Ringteil (74) umfasst und/oder worin das spiralförmige Einsatzelement (72) ferner einen Bodenteil (75, 76) umfasst und/oder worin das spiralförmige Einsatzelement (72) und der Pflanzenbehälter (70) mit komplementären Verbindungsmitteln (80) für die lösbare Verbindung des spiralförmigen Einsatzelements (72) mit dem Pflanzenbehälter (70) derart versehen sind, dass es darin axial nach oben abgegrenzt ist.

11. Epiphytenpflanzsystem nach einem der vorhergehenden Ansprüche 9 oder 10, worin das spiralförmige Einsatzelement (72) aus biologisch abbaubarem Material hergestellt ist.

12. Epiphytenpflanzsystem nach einem der vorhergehenden Ansprüche, worin der Boden (5) des Pflanzenbehälters (1) mit einem rinnenförmigen Nebenzwischenraum (21) versehen ist, der entlang des Umfangs des Bodens (5) verläuft und mit einem unteren Ende des rinnenförmigen Hauptzwischenraums (20a, 20b) verbunden ist; und/oder worin mindestens zwei rinnenförmige Hauptzwischenräume (20a, 20b) vorgesehen sind, die beide an verschiedenen Stellen spiralförmig entlang der umfänglichen Wandung (2) und der Außenwand (11) nach unten verlaufen; und/oder worin eine Vielzahl an Pflanzenbehältern (1) vorgesehen ist, die zusammen eine integrale Schale (30) mit einer Vielzahl an Aufnahmeräumen bilden; und/oder worin der vorgeformte Substratpfropfen (10) aus einer zusammengeklebten Zusammensetzung aus Substratmaterialien hergestellt ist.

13. Verfahren zum Kultivieren von Epiphytenpflanzen, insbesondere Phalaenopsis oder Anthurium, umfassend die Schritte:
- Bereitstellen eines Aufbaus aus vorgeformtem Substratpfropfen (10), Epiphytenpflanze (15) und Pflanzenbehälter (1) des Epiphytenpflanzsystems nach einem der vorhergehenden Ansprüche; und
- Wachsen lassen der Wurzeln (17) der Epiphytenpflanze (15) in Richtung von und weiter entlang des rinnenförmigen Hauptzwischenraums (20a, 20b), der zwischen der umfänglichen Wandung (2) des Pflanzenbehälters (1) und der Außenwand (11) des vorgeformten Substratpfropfens (10) von dem Substratmaterial freigelassen wurde.

14. Vorgeformter Substratpfropfen (10), insbesondere für eine Verwendung in dem Pflanzsystem nach einem der vorhergehenden Ansprüche, welcher eine spiralförmig nach unten verlaufende Aussparung innerhalb einer Außenwand (11) des Substratpfropfens (10) umfasst.

15. Verwendung eines Pflanzenbehälters (1) nach Anspruch 3 und einem der anderen Ansprüche 1 bis 12 zum Kultivieren von einer Epiphytenpflanze (15), insbesondere Phalaenopsis oder Anthurium.

## Revendications

1. Système de culture d'épiphytes comprenant :
un récipient pour plante (1) ayant un fond et une paroi circonférentielle (5, 2) qui délimitent ensemble un espace de support ;
un bouchon de substrat préformé (10) placé à l'intérieur de l'espace de support ; et
une épiphyte (15) du type à racines à l'air libre (17) et étant placée à l'intérieur du bouchon (10),
**caractérisé en ce que** :
le récipient pour plante (1) et le bouchon de substrat préformé (10) définissent ensemble un ou plusieurs espaces en forme de rainure principaux (20a, 20b) entre la paroi circonférentielle (2) du récipient pour plante (1) et une paroi externe (11) du bouchon de substrat préformé (10),
dans lequel lesdits un ou plusieurs espaces en forme de rainure (20a, 20b) sont dépourvus de matériau de substrat, et
dans lequel lesdits un ou plusieurs espaces en forme de rainure (20a, 20b) s'étendent en spirale vers le bas le long desdites parois circonférentielle et externe (2, 11) pour qu'une ou plusieurs racines à l'air libre (17) de l'épiphyte (15) se développent.

2. Système de culture d'épiphytes selon la revendication 1, dans lequel l'espace en forme de rainure principal (20a, 20b) est au moins partiellement formé comme un évidement s'étendant vers le bas en spirale à l'intérieur de la paroi externe (11) du bouchon (10).

3. Système de culture d'épiphytes selon la revendication 1 ou 2, dans lequel l'espace en forme de rainure principal (20a, 20b) est délimité par un bord en saillie latéralement vers l'intérieur (3a, 3b) s'étendant vers le bas en spirale formé sur la paroi circonférentielle (2) du récipient pour plante (1).

4. Système de culture d'épiphytes selon la revendication 3, dans lequel le bord latéralement en saillie (3a, 3b) de la paroi circonférentielle (2) délimite un côté inférieur de l'espace en forme de rainure principal (20a, 20b).

5. Système de culture d'épiphytes selon la revendication 4, dans lequel le bord latéralement en saillie (3a, 3b) a une dimension comprise entre 1 et 4 mm, en particulier entre 2 et 3 mm.

6. Système de culture d'épiphytes selon l'une des revendications précédentes, dans lequel la forme de la paroi externe (11) du bouchon de substrat (10) varie de la forme de paroi circonférentielle (2) du récipient pour plante (1) de sorte quelles ne sont pas tout à fait complémentaires entre elles lorsqu'elles sont assemblées.

7. Système de culture d'épiphytes selon les revendications 4 ou 5 et 6, dans lequel la paroi circonférentielle (2) du récipient pour plante (1) a sensiblement une forme tronconique avec un premier angle de cône (CA1), et dans lequel la paroi externe (11) du bouchon de substrat (10) a sensiblement une forme tronconique avec un second angle de cône (CA2), et dans lequel le second angle de cône (CA2) de la paroi externe (11) du bouchon de substrat (10) est supérieur au premier angle de cône (CA1) de la paroi circonférentielle (2) du récipient pour plante (1), et la paroi externe (11) du bouchon de substrat (10) délimite un côté supérieur de l'espace en forme de rainure principal (3a, 3b).

8. Système de culture d'épiphytes selon l'une des revendications précédentes, dans lequel le récipient pour plante (1) est au moins partiellement composé d'un matériau sensiblement transparent.

9. Système de culture d'épiphytes selon l'une des revendications précédentes, dans lequel l'espace en forme de rainure principal (78a, 78b) est délimité par un élément d'insert en spirale (72), qui comprend une crête s'étendant vers le bas en spirale (73a, 73b) et qui s'étend entre le récipient pour plante (70) et le bouchon de substrat préformé (10), dans lequel la crête (73a, 73b) délimite en particulier un côté supérieur et inférieur de l'espace en forme de rainure principal (78a, 78b).

10. Système de culture d'épiphytes selon la revendication 9, dans lequel l'élément d'insert en spirale (72) comprend en outre une partie annulaire supérieure fermée de manière circonférentielle (74), et/ou dans lequel l'élément d'insert en spirale (72) comprend en outre une partie inférieure (75, 76) et/ou dans lequel l'élément d'insert en spirale (72) et le récipient pour plante (70) sont prévus avec des moyens de raccordement complémentaires (80) pour raccorder de manière amovible l'élément d'insert en spirale (72) au récipient pour plante (70) de sorte qu'il est axialement délimité vers le haut à l'intérieur de ce dernier.

11. Système de culture d'épiphytes selon l'une des revendications 9 ou 10, dans lequel l'élément d'insert en spirale (72) est réalisé avec un matériau biodégradable.

12. Système de culture d'épiphytes selon l'une des revendications précédentes, dans lequel le fond (5) du récipient pour plante (1) est prévu avec un espace en forme de rainure secondaire (21) s'étendant autour de la circonférence externe du fond (5) et se raccordant à une extrémité inférieure de l'espace en forme de rainure principal (20a, 20b), et/ou dans lequel au moins deux espaces en forme de rainure principaux (20a, 20b) sont prévus tous deux en s'étendant dans des positions différentes vers le bas en spirale le long desdites parois circonférentielle et externe (2, 11), et/ou dans lequel une pluralité de récipients pour plante (1) sont prévus ensemble pour former un plateau solidaire (30) ayant une pluralité d'espaces de support, et/ou dans lequel le bouchon de substrat préformé (10) a été fabriqué avec une composition collée de matériaux de substrat.

13. Procédé pour cultiver des épiphytes, en particulier un phalaenopsis ou un anthurium, comprenant les étapes consistant à :
prévoir un ensemble composé du bouchon de substrat préformé (10), de l'épiphyte (15) et du récipient pour plante (1) du système de culture d'épiphytes selon l'une des revendications précédentes ; et
permettre aux racines (17) de l'épiphyte (15) de se développer vers et plus à distance le long de l'espace en forme de rainure principal (20a, 20b) qui a été laissé dépourvu de matériau de substrat entre la paroi circonférentielle (2) du récipient pour plante (1) et la paroi externe (11) du bouchon préformé (10).

14. Bouchon de substrat préformé (10) en particulier destiné à être utilisé dans le système de culture selon l'une des revendications précédentes, comprenant un évidement s'étendant vers le bas en spirale à l'intérieur d'une paroi externe (11) du bouchon (10).

15. Utilisation d'un récipient pour plante (1) selon la revendication 3 et l'une quelconque des revendications 1 à 12, pour cultiver des épiphytes (15), en particulier un phalaenopsis ou un anthurium.
